# EUROPÄISCHE PATENTANMELDUNG

(11) **EP 2 290 200 A1**
(43) Veröffentlichungstag der Anmeldung: **02.03.2011**
(21) Anmeldenummer: 09165561.3
(22) Anmeldetag: 15.07.2009
(51) Int. Cl.: F01K 7/34, F01K 17/02, F01K 17/04

(54) **Dampfkraftwerksanlage mit Dampfturbineneinheit und Prozessdampfverbraucher und Verfahren zum Betreiben einer Dampfkraftwerksanlage mit Dampfturbineneinheit und Prozessdampfverbraucher**

(71) Anmelder: Siemens Aktiengesellschaft, 80333 München (DE)
(72) Erfinder: Früh, Tilman, 91052 Erlangen (DE); Graeber, Carsten, 91056 Erlangen (DE); Rost, Mike, 91058 Erlangen (DE)

(57) **Zusammenfassung**

Dampfkraftwerksanlage mit Dampfturbineneinheit und Prozessdampfverbraucher und Verfahren zum Betreiben einer Dampfkraftwerksanlage mit Dampfturbineneinheit und Prozessdampfverbraucher

Die Erfindung betrifft eine Dampfkraftwerksanlage (1) mit mindestens einer Dampfturbineneinheit (2) und einem Prozessdampfverbraucher (3), wobei der Prozessdampfverbraucher (3) einen Wärmetauscher (4) umfasst, und die Dampfturbineneinheit (2) über eine Anzapfleitung (5) mit einem Wärmetauscher (4) verbunden ist, und in die Anzapfleitung (5) primärseitig ein Enthitzer geschaltet ist, so dass ein über die Anzapfleitung (5) der Turbinenanlage (2) entnommener Prozessdampf durch den Enthitzer auf die Prozessbedingungen des Prozessdampfverbrauchers (3) konditionierbar ist, und zudem die im Enthitzer (6) entnommene Wärmeenergie der Dampfkraftwerksanlage (1) wieder zuführbar ist.

## Beschreibung

Die Erfindung betrifft eine Dampfkraftwerksanlage mit Dampfturbineneinheit und Prozessdampfverbraucher, insbesondere einer Abscheidevorrichtung für Kohlendioxid als Prozessdampfverbraucher. Die Erfindung betrifft außerdem ein Verfahren zum Betreiben einer Dampfkraftwerksanlage mit einer Dampfturbineneinheit und einem Prozessdampfverbraucher.

Dampfkraftwerksanlagen (DKW) zur Erzeugung elektrischer Energie bestehen im Wesentlichen aus einer Dampfturbineneinheit und einem befeuerten Kessel, oder in Ausgestaltung als Gas- und Dampfturbinenkraftwerksanlage (GuD), aus Gasturbineneinheit mit nachgeschaltetem Abhitzedampferzeuger und Dampfturbineneinheit. Üblicherweise werden derartigen Kraftwerksanlagen Dampf oder Energie für sekundäre Prozesse, die nicht direkt mit der Stromerzeugung in Verbindung stehen, an entsprechenden Stellen entnommen. So wird z.B. für eine der Kraftwerksanlage nachgeschaltete Rauchgasreinigungsanlage, z.B. eine Kohlendioxidabscheidevorrichtung, mit Prozessdampf betrieben, welcher der Dampfturbineneinheit an einer Zwischenstufe der Dampfturbineneinheit entnommen wird.

Ein weiteres Beispiel für Prozessdampfauskopplung aus der Dampfturbineneinheit ist die Fernwärmeversorgung. Die Menge an entnommenem Dampf ist dabei abhängig von der Betriebsweise des Prozessdampfverbrauchers oder der Abscheidevorrichtung für Kohldioxid. Die entnommene Dampfmenge führt dabei zu einer Reduzierung des Dampfmassenstroms, welcher der nach der Entnahme nachfolgenden Turbinenstufen der Dampfturbineneinheit fehlt. In der Regel fordern Prozessdampfverbraucher, wie z.B. eine Kohlendioxidabscheidevorrichtung, Prozessdampf auf einem entsprechenden Druck- und Temperaturniveau.

Für derzeitige Konzepte von Abscheidevorrichtungen für Kohlendioxid wird eine große Menge an thermischer Energie benötigt, für die Prozessdampf aus dem Wasser-Dampf-Kreislauf der Kraftwerksanlage entnommen werden muss. Die thermische Energie wird durch Kondensation des Prozessdampfes in die Desorptionseinheit der Abscheidevorrichtung für Kohlendioxid eingebracht. Daraus resultiert für den Prozessdampf ein Mindestdruck, der zwischen 2 und 4 bar liegt. Auf diesem Druckniveau ist der Dampf bei modernen Kraftwerksanlagen mit Zwischenüberhitzung und hohen Dampftemperaturen jedoch noch stark überhitzt. Die Energie eines solchen stark überhitzten Dampfes lässt sich bei der normalen Wärmeabgabe in Wärmetauschern nur unzureichend nutzen.

Deshalb wird bei bekannten Kraftwerksanlagen der entnommene Prozessdampf durch die Einspritzung von Wasser im Temperaturniveau reduziert, und dadurch leicht überhitzt. Bei dem eingespritzten Wasser handelt es sich in der Regel um Kondensat aus dem Wasser-Dampf-Kreislauf der Kraftwerksanlage. Für den Desorptionsprozess ergeben sich dadurch keine Vorteile. Nachteilig an diesem bekannten Verfahren ist insbesondere, dass die Energie die in der Überhitzung des Dampfes liegt nicht optimal genutzt wird. Außerdem ist die Auskopplung von Kondensat aus dem Wasser-Dampf-Kreislauf der Kraftwerksanlage zur Einspritzung in den stark überhitzten Dampf als Kühlmedium aufwändig.

Genereller Nachteil an Dampfkraftwerksanlagen mit Prozessdampfverbrauchern, die aus dem Stand der Technik bekannt sind, sind Stromverluste, die dadurch entstehen, dass hochwertiger Prozessdampf, z.B. stark überhitzter Dampf, der Dampfturbineneinheit entnommen wird, obwohl für die Prozessdampfverbraucher ein leicht überhitzter Dampf ausreichend ist.

Eine Aufgabe der Erfindung ist es daher, eine Dampfkraftwerksanlage mit Dampfturbineneinheit und Prozessdampfverbraucher vorzuschlagen, bei der der Dampfturbineneinheit entnommene Dampf energetisch vorteilhaft und weitgehend umfassend nutzbar ist. Eine weitere Aufgabe der Erfindung ist es, ein Verfahren zum Betreiben einer Dampfkraftwerksanlage mit Dampfturbineneinheit und Prozessdampfverbraucher vorzuschlagen, bei dem der dem Dampfkraftwerksprozess entnommene Prozessdampf energetisch vorteilhaft für den Prozessdampfverbraucher konditioniert wird.

Die auf eine Dampfkraftwerksanlage gerichtete Aufgabe der Erfindung wird gelöst mit einer Dampfkraftwerksanlage mit mindestens einer Dampfturbineneinheit und einem Prozessdampfverbraucher, wobei der Prozessdampfverbraucher einen Wärmetauscher umfasst, und die Dampfturbineneinheit über eine Anzapfleitung mit dem Wärmetauscher verbunden ist, wobei in die Anzapfleitung primärseitig ein Enthitzer geschaltet ist.

Der Erfindung liegt dabei die Idee zugrunde, eine Konditionierung eines der Dampfturbineneinheit entnommenen Prozessdampfes für den Prozessdampfverbraucher durch einen Enthitzer zu erzielen. Durch den Enthitzer ist es möglich, den Prozessdampf auf ein für den Prozessdampfverbraucher optimiertes Temperaturniveau zu bringen. Dabei ermöglicht der Enthitzer eine Weiterverwendung der dem Prozessdampf entnommenen Energie. Derartige Enthitzer können als Wärmetauscher ausgestaltet sein, dabei nimmt der Enthitzer primärseitig Energie auf und gibt sie an ein Medium sekundärseitig ab. Durch den Einsatz eines Enthitzers kann zudem auf andere Maßnahmen zur Anpassung des Temperaturniveaus, wie z.B. eine Einspritzung von Wasser oder Kondensat, theoretisch verzichtet werden. Die Erfindung ermöglicht somit eine Nutzung der durch den Enthitzer entnommenen Energie bei gleichzeitiger Konditionierung des Prozessdampfes für den nachgeschalteten Prozessdampfverbraucher, wodurch der Gesamtwirkungsgrad der Dampfkraftwerksanlage erheblich gesteigert wird. Die Erfindung lässt sich gegenüber den bekannten Verschaltungen überdies auch mit kürzeren Rohrleitungswegen realisieren, wodurch Kosten für die Dampfkraftwerksanlage reduziert werden.

In einer vorteilhaften Weiterbildung der Dampfkraftwerksanlage umfasst die Dampfkraftwerksanlage weiterhin einen Wasser-Dampf-Kreislauf mit einer Hauptkondensatleitung und einer Rücklaufkondensatleitung, wobei der Enthitzer sekundärseitig in die Rücklaufkondensatleitung geschaltet ist. Diese Art der Verschaltung ermöglicht vorteilhaft die Nutzung der durch den Enthitzer vom Prozessdampf abgeführten Energie zur Vorwärmung eines Kondensats in dem Wasser-Dampf-Kreislauf der Dampfkraftwerksanlage. Durch den Beitrag des Enthitzers zur Vorwärmung des Kondensats wird ein dem Enthitzer sekundärseitig nachgeschalteter Vorwärmer zur Kondensatvorwärmung entlastet. Dadurch kann der für diesen Vorwärmer notwendige Anzapfdampf aus der Dampfturbineneinheit reduziert werden, wodurch sich der Anteil des Arbeitsdampfes in der Dampfturbineneinheit erhöht. Jedoch wird durch die Abkühlung des Prozessdampfes in dem Enthitzer eine größere Menge an Dampf für die Zuführung in den Enthitzer notwendig, um dem Prozessdampfverbraucher die gleiche Wärmemenge in Form von Prozessdampf zur Verfügung stellen zu können. Somit findet durch den Einsatz des Enthitzers insbesondere eine Verschiebung der Dampfmengen statt, da jedoch der vom Druck höher gelegene, und somit höherwertigere Anzapfdampf reduziert wird, ergibt sich daraus eine Wirkungsgradverbesserung der Dampfkraftwerksanlage. Durch den Einsatz des Kondensats als Kühlmedium für den Enthitzer kann ferner eine aufwändige Auskopplung von Hauptkondensat im Wasser-Dampf-Kreislauf als Kühlmedium vermieden werden. Dadurch wird die Anzahl der Schnittstellen reduziert und die prozesstechnische Einbindung vereinfacht.

Bei einer besonderen Ausgestaltung der Dampfkraftwerksanlage ist der Prozessdampfverbraucher eine Abscheidevorrichtung für Kohlendioxid aus einem Rauchgas. Derartige Kohlendioxidabscheidevorrichtungen benötigen eine große Menge an thermischer Energie, die zwangsläufig in Form von Prozessdampf aus dem Wasser-Dampf-Kreislauf der Dampfturbinenkraftwerksanlage entnommen wird. Der entnommene Prozessdampf wird dabei insbesondere für die Desorption bzw. Regenerierung eines Lösungsmittels benötigt. Eine Prozessanforderung der Rauchgaswäsche ist ein Mindesttemperaturniveau, wodurch bei einer Wärmeabgabe durch Kondensation nach derzeitigem Kenntnisstand ein Mindestdruck des Prozessdampfes zwischen 2 und 4 bar resultiert. Auf diesem Druckniveau ist der Dampf bei einem normalen Kraftwerksprozess mit Zwischenüberhitzung und hohen Dampftemperaturen noch stark überhitzt. Die Energie des überhitzten Dampfes lässt sich in einem Desorptionsprozess ohne vorgelagerte Enthitzung nur unzureichend nutzen, da für den Wärmetransport nur das Sattdampfniveau des Prozessdampfes relevant ist.

Vorteilhaft ist die Anzapfleitung an der Überströmleitung der Dampfturbineneinheit angeschlossen. Die Überströmleitung verbindet die Mitteldruckturbine mit der Niederdruckturbine. Eine Entnahme des Prozessdampfes an der Überströmleitung ist konstruktiv einfacher zu realisieren, als die Entnahme von Prozessdampf zwischen den Stufen der Dampfturbinen.

Durch die Erfindung ist es möglich, den für einen Prozessdampfverbraucher erforderlichen Dampf aus einer günstigen Stelle der Dampfturbineneinheit zu entnehmen, und energetisch vorteilhaft einem Prozessdampfverbraucher zuzuführen. Ein anfallender Überhitzungsanteil des Prozessdampfes kann durch den erfindungsgemäßen Enthitzer an anderer Stelle der Dampfkraftwerksanlage vorteilhaft genutzt werden.

Die auf ein Verfahren gerichtete Aufgabe der Erfindung wird gelöst durch eine Dampfkraftwerksanlage mit einer Dampfturbineneinheit und Prozessdampfverbraucher wobei der Dampfturbineneinheit an einer ersten Prozessstufe ein überhitzter Dampf entnommen und an einer zweiten Prozessstufe der überhitzte Dampf enthitzt wird, wobei dem überhitzten Dampf Wärme entzogen wird und ein leicht überhitzter Dampf gebildet wird, und wobei der leicht überhitzte Dampf dem Prozessdampfverbraucher zugeführt wird.

Die Erfindung geht dabei von der Überlegung aus, dem Prozessdampfverbraucher einen konditionierten Dampf in Form eines leicht überhitzten Dampfes zur Verfügung zu stellen, der zuvor in einer ersten Prozessstufe der Dampfturbineneinheit in Form von überhitztem Dampf entnommen wurde und in einer zweiten Prozessstufe enthitzt wurde.

In einer vorteilhaften Weiterentwicklung umfasst die Dampfkraftwerksanlage weiterhin einen Wasser-Dampf-Kreislauf, wobei die dem überhitzten Dampf entzogene Wärme dem Kondensat des Wasser-Dampf-Kreislaufes der Dampfkraftwerksanlage zugeführt wird. Dadurch wird die vom Enthitzer abgeführte Energie zur Vorwärmung eines Kondensats in dem Wasser-Dampf-Kreislauf der Dampfkraftwerksanlage nutzbar. Durch den Beitrag des Enthitzers zur Vorwärmung des Kondensats wird ein dem Enthitzer sekundärseitig nachgeschalteter Vorwärmer zur Kondensatvorwärmung entlastet. Der notwendige Anzapfdampf aus der Dampfturbineneinheit kann für diesen Vorwärmer reduziert werden, wodurch sich der Anteil des Arbeitsdampfes in der Dampfturbineneinheit erhöht.

Bei einer besonderen Weiterentwicklung des Dampfkraftprozesses wird der leicht überhitzte oder konditionierte Dampf im Prozessdampfverbraucher für die Abscheidung von Kohlendioxid verwendet. Der konditionierte Dampf wird dabei insbesondere für die Desorption bzw. Regenerierung eines Lösungsmittels verwendet.

Vorteilhafterweise wird der überhitzte Dampf der Dampfturbineneinheit aus der Überströmleitung zwischen der Mitteldruckstufe und der Niederdruckstufe entnommen. Eine Entnahme des Prozessdampfes an der Überströmleitung ist konstruktiv einfacher zu realisieren, als die Entnahme von Prozessdampf zischen den Stufen der Dampfturbinen.

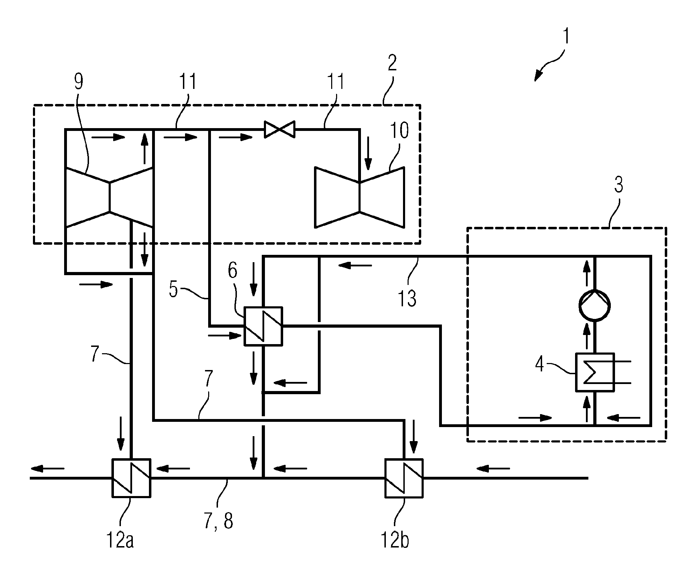

Folgend werden die Ausführungsbeispiele der Erfindung anhand einer beigefügten schematischen Zeichnung näher erläutert. Die in FIG 1 dargestellte Dampfkraftwerksanlage 1 zeigt im Wesentlichen eine Dampfturbineneinheit 2 und einen Prozessdampfverbraucher 3 sowie einen Enthitzer 6.

Die Dampfturbineneinheit 2 zeigt eine Mitteldruckturbine 9 und eine Niederdruckturbine 10, die über eine Überströmleitung 11 miteinander verbunden sind. Im Betrieb der Dampfkraftwerksanlage 1 kann somit ein die Mitteldruckturbine 9 verlassender überhitzter Dampf in die Niederdruckturbine 10 überführt werden. An die Überströmleitung 11 ist die Anzapfleitung 5 angeschlossen. Durch die Anzapfleitung 5 kann ein Teil des überhitzten Dampfes aus der Überströmleitung 11 abgezweigt werden.

Die Anzapfleitung 5 ist weiterhin primär zuleitend mit dem Enthitzer 6 verbunden. Primär ableitend ist der Enthitzer 6 mit dem Prozessdampfverbraucher 3 verbunden. Durch den Enthitzer 6 wird einem in der Anzapfleitung 5 geführten überhitzten Dampf Wärme entzogen. Den Enthitzer verlässt primär ableitend ein leicht überhitzter Dampf.

Der Prozessdampfverbraucher 3 ist hier lediglich schematisch dargestellt. Wesentliche Schnittstelle des Prozessdampfverbrauchers 3 mit der Dampfturbineneinheit ist insbesondere ein den Prozessdampfverbraucher 3 umfassender Wärmetauscher 4. Der durch Wärmeentzug im Enthitzer 6 gebildete gesättigte Dampf wird dem Wärmetauscher 4 des Prozessdampfverbrauchers 3 zugeführt. Dabei wird Wärme von dem gesättigten Dampf an den Prozessdampfverbraucher abgegeben, wobei der gesättigte Dampf kondensiert.

Das Rücklaufkondensat aus dem Prozessdampfverbraucher 3 wird nun sekundär zuleitend über die Rücklaufkondensatleitung 13 dem Enthitzer 6 zugeführt. Dabei wird das Kondensat erwärmt und sekundär aus dem Enthitzer 6 abgeleitet. Die Ableitung erfolgt dabei in die Hauptkondensatleitung 8 des Wasser-Dampf-Kreislaufs 7 der Dampfkraftwerksanlage 1. Das Kondensat ist für eine erneute Verdampfung und Einleitung in die Dampfturbineneinheit 2 vorgesehen.

Durch die Erwärmung des Kondensats aus dem Prozessdampfverbraucher 3 im Enthitzer 6 wird der Vorwärmer 12a entlastet. Durch die Entlastung des Vorwärmers 12a muss der Dampfturbineneinheit 2 weniger Dampf für die Vorwärmung des Kondensats entnommen werden. Dadurch erhöht sich der Anteil des Arbeitsdampfes in der Dampfturbineneinheit 2, woraus sich eine Wirkungsgradverbesserung der Dampfkraftwerksanlage 1 ergibt.

## Patentansprüche

1. Dampfkraftwerksanlage (1) mit mindestens einer Dampfturbineneinheit (2) und einem Prozessdampfverbraucher (3), wobei der Prozessdampfverbraucher (3) einen Wärmetauscher (4) umfasst, und die Dampfturbineneinheit (2) über eine Anzapfleitung (5) mit dem Wärmetauscher (4) verbunden ist, **dadurch gekennzeichnet, dass** in die Anzapfleitung (5) primärseitig ein Enthitzer (6) geschaltet ist.

2. Dampfkraftwerksanlage (1) nach Anspruch 1, **dadurch gekennzeichnet, dass** die Dampfkraftwerksanlage (1) einen Wasser-Dampfkreislauf (7) mit einer Hauptkondensatleitung (8), und eine Rücklaufkondensatleitung (13) umfasst, und der Enthitzer (6) sekundärseitig in die Rücklaufkondensatleitung (13) geschaltet ist.

3. Dampfkraftwerksanlage (1) nach Anspruch 1 oder 2, **dadurch gekennzeichnet, dass** der Prozessdampfverbraucher (3) eine Abscheidevorrichtung für Kohlendioxid aus einem Rauchgas ist.

4. Dampfkraftwerksanlage (1) nach einem der Ansprüche 1 bis 3, **dadurch gekennzeichnet, dass** die Dampfturbineneinheit (2) aus mindestens einer Mitteldruckturbine (9) und mindestens einer Niederdruckturbine (10) besteht, wobei die Mitteldruckturbine 9 mit der Niederdruckturbine (10) über eine oder mehrere Überströmleitungen (11) miteinander verbunden ist, und dass die Anzapfleitung (5) von der Überströmleitung (11) abzweigt.

5. Verfahren zum Betreiben eines Dampfkraftwerksanlage mit wenigstens einer Dampfturbineneinheit und einem Prozessdampfverbraucher, wobei der Dampfturbineneinheit an einer ersten Prozessstufe ein überhitzter Dampf entnommen und an einer zweiten Prozessstufe der überhitzte Dampf enthitzt wird, wobei dem überhitzten Dampf Wärme entzogen wird und ein leicht überhitzter Dampf gebildet wird, und wobei der konditionierte Dampf dem Prozessdampfverbraucher zugeführt wird.

6. Verfahren nach Anspruch 5, wobei die Dampfkraftwerksanlage einen Wasser- Dampfkreislauf umfasst und die dem überhitzten Dampf entzogene Wärme dem Kondensat des Wasser- Dampfkreislaufes der Dampfkraftwerksanlage zugeführt wird.

7. Verfahren nach Anspruch 5 oder 6, bei dem im Prozessdampfverbraucher der konditionierte Dampf für einen Kohlendioxid-Abscheideprozess verwendet wird.

8. Verfahren nach einem der Ansprüche 5 bis 7, bei dem der Dampfturbineneinheit der überhitzte Dampf entnommen wird aus einer Überströmung zwischen einer Mitteldruckstufe und einer Niederdruckstufe.
